(19) Europäisches Patentamt
European Patent Office
Office européen des brevets

(11) Publication number: **0 097 388**
**B1**

(12) # EUROPEAN PATENT SPECIFICATION

(45) Date of publication of patent specification: **22.01.86**

(51) Int. Cl.[4]: **C 02 F 3/28**, C 02 F 1/58

(21) Application number: **83200788.4**

(22) Date of filing: **01.06.83**

(54) **A method and flow-sheet for adapting waste water, being rich in calcium, for an anaerobic fermentation.**

(30) Priority: **23.06.82 NL 8202536**

(43) Date of publication of application:
**04.01.84 Bulletin 84/01**

(45) Publication of the grant of the patent:
**22.01.86 Bulletin 86/04**

(84) Designated contracting states:
**AT BE CH DE FR GB IT LI LU NL SE**

(56) References cited:
**NL-A- 7 611 903**
**US-A- 2 661 332**
**US-A- 3 981 800**
**US-A- 4 040 953**
**CHEMICAL ABSTRACTS, vol. 91, no. 2, 9th July 1979, page 255, no. 9157t, Columbus, Ohio, USA**

(73) Proprietor: **Gist - Brocades N.V.**
**Wateringseweg 1 P.O. Box 1**
**NL-2600 MA Delft (NL)**

(72) Inventor: **Zoetemeyer, Robert Jan**
**J. Westerweelstraat 9**
**NL-3417 EN Montfoort (NL)**

(74) Representative: **Van der Straaten, Jan Anthony et al**
**c/o GIST-BROCADES N.V. Patents and Trademarks Department Wateringseweg 1 P.O. Box 1**
**NL-2600 MA Delft (NL)**

**EP 0 097 388 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue St-Denis, 75001 Paris, France

**Description**

The present invention relates to a method for adapting waste water, being rich in calcium, for an anaerobic fermentation and to a flow-sheet for carrying out said method.

Frequently, the calcium content of waste water that contains dissolved organic components, that have to be decomposed by means of an anaerobic fermentation, for example waste water of a sugar factory, is increased by adding calcium hydroxide (lime) so that the pH of said water is increased considerably, for example up to a pH of 11, and consequently the growth of microorganisms present in said waste water will be inhibited.

For the anaerobic fermentation of organic materials the complex material should be converted first into smaller soluble components, such as volatile fatty acids, lactic acid and alcohols. This is achieved by means of a hydrolysis and acidification. Subsequently, said smaller, soluble components may be degraded by means of a further fermentation into simple materials such as $CO_2$ and $CH_4$. In said hydrolysis and acidification the concentration of the calcium ions may be higher, as higher the concentration of fermentable decomposition products is. However, at some moment said calcium should be removed from said waste water. It is obvious to perform said removal by precipitating said calcium as calcium carbonate somewhere in the process. However, this might occur only when the growth inhibiting effect of said $Ca(OH)_2$ is no longer required. Thus in the acidification pond or acidification reactor intended to be used for the hydrolysis and acidification, waste water being rich in calcium is supplied, and calcium may be precipitated therefrom if the pH of said waste water and the calcium concentration thereof are sufficiently high. If in the sludge pond or sludge reactor the pH of the liquid will be decreased by acid formed by anaerobic and facultatively anaerobic microorganisms, a part of the precipitated calcium will be dissolved again, so that even the water containing acids that leaves the sludge pond or sludge reactor is rich in calcium. Said acidified waste water that is rich in calcium, is subsequently supplied to the reactor wherein a further fermentation, at which predominantly methane is formed, occurs. In case it appears that the waste water that is supplied to the reactor wherein the methane forming occurs, has a higher calcium content than the water that leaves the reactor, calcium will be precipitated as calcium carbonate in said reactor.

The presence of much calcium carbonate in the methane forming sludge has an adverse effect on the structure of said sludge. The cleaning of the methane reactor to remove precipitated calcium carbonate, for example during a break of the process is substantially impossible and if it would be possible at all, no method would be available to remove extremely said calcium compounds from the active sludge.

Apart from the ions that do not play an important role in the present problem, the undermentioned neutrality equation may be used for said waste water being rich in calcium.

$$[H^+] + 2\,[Ca^{++}] = [OH^-] + [HCO_3^-] + [Z^-] + 2\,[CO_3^{--}] \qquad (1)$$

wherein $[Z^-]$ stands for the concentration of fatty acids and lactic acid. At a pH of from 5 to 7.5, that is usual in the sludge pond and the methane reactor,

$$[H^+],\ [OH^-] \text{ and } [CO_3^{--}]$$

may be neglected in comparison with

$$[Ca^{++}],\ [HCO_3^-] \text{ and } [Z^-].$$

Thus the neutrality equation may be simplified :

$$2\,[Ca^{++}] = [HCO_3^-] + [Z^-] \qquad (2)$$

However, in the sludge pond :

$$2\,[Ca^{++}] = [Z^-] \qquad (3)$$

since in said pond the $p_{CO2}$ is very low (substantially zero) and consequently $[HCO_3^-]$ will be very low and consequently in comparison with $[Z^-]$ it may be neglected.

In the methane reactor is approximately

$$2\,[Ca^{++}] = [HCO_3^-] \qquad (4)$$

since at a good decomposition $[Z^-]$ will be substantially zero and consequently it may be neglected in comparison with $[HCO_3^-]$.

The calcium concentration of the waste water supplied to the methane reactor is determined by $[Z^-]$

and since $[Z^-]$ is dependant on the COD, the calcium concentration of the water supplied to the methane reactor is actually dependant on the level of the COD. In case the COD is very high the $Ca^{++}$ concentration in the waste water supplied to the methane reactor will be higher than according to the equation :

$$2\,[Ca^{++}] = [HCO_3^-]$$

and consequently at a constant pH calcium will be precipitated as calcium carbonate in the methane reactor.

It was found now, that said problem may be solved by shifting in at least a part of the waste water that has been subjected to an anaerobic fermentation, the equilibrium

$$Ca(OH)_2 + 2\,CO_2 \leftrightarrows Ca(HCO_3)_2 \leftrightarrows CaCO_3\downarrow + CO_2\uparrow + H_2O$$

that has been adjusted in the waste water by the reaction of the carbon dioxide gas — formed during said anaerobic fermentation — with $Ca(OH)_2$ to the righthand side, by reducing the partial pressure of carbon dioxide, then diluting waste water being rich in calcium with at least a part of the waste water that is poor in calcium and subsequently the mixture obtained is subjected to an anaerobic fermentation.

In this way one may achieve simply, that the percentage of calcium till either just before the sludge pond or sludge reactor, or till in the sludge pond or sludge reactor or till just before the methane reactor is still high, but the waste water supplied to the methane reactor has not a considerably higher percentage of calcium than the waste water to which no $Ca(OH)_2$ has been added, respectively than the waste water leaving the methane reactor.

According to the invention, the partial pressure of carbon dioxide is preferably reduced by reducing the gas pressure above the surface of the waste water while a gentle agitation takes place and/or stripping of the waste water with a gas different from carbon dioxide c.q. by means of aerating said waste water.

E.g. Air or nitrogen may be used as a gas different from carbon dioxide, but also carbon dioxide-free biogas may be used. For this purpose one may use a gas produced at the fermentation, from which the carbon dioxide, if any, present therein, has been removed.

The present method may be used to blend continuously a continuous stream of waste water being rich in calcium, with waste water being poor in calcium obtained according to the invention.

The volume ratio at said mixing step is dependant on the COD and the continuous calcium concentration of the water leaving the methane reactor.

The volume ratio to be used may be determined and automatized on the basis of the COD and $[Ca^{++}]$ of the waste water, that, if desired, has been hydrolyzed and acidified, but still has not been adapted for the further anaerobic fermentation, on one side and $[Ca^{++}]$ of the waste water leaving the methane reactor on the other side. The mix ratio should be so that $[Ca^{++}]$ of the water supplied to the methane reactor and of the water leaving the methane reactor is substantially equal.

According to the method of the present invention it is even possible to reduce a too high percentage of calcium of the sludge in the methane reactor by selecting the mix ratio of waste water being poor in calcium : waste water being rich in calcium, in such a way that $[Ca^{++}]$ of the water leaving the reactor is higher than $[Ca^{++}]$ of the water supplied to the reactor.

The invention relates also to an apparatus for performing said process, which is characterized in that it comprises a space for the anaerobic fermentation, a recycling tube to reintroduce a part of the water treated therein, a stripping device having a gas inlet- and/or pressure reducing means in said recycling pipe, a space to enable the precipitated calcium carbonate to settle and a mixing connection of said recycling tube to a supply line for waste water to be purified to the fermentation space in order to add said liquid from said stripping device to said waste water to be purified.

Preferably said device according to the present invention is performed in such a way that the stripping device has means to block the liquid stream there from, means to remove substantially all liquid therefrom and means such as mechanical shovels to remove the calcium carbonate therefrom.

In case the hydrolysis, the acidification and the methane forming occur in one step, waste water being poor in calcium and waste water being rich in calcium are mixed preferably just before supplying it to the methane reactor.

The invention will be elucidated now further by means of the attached flow-sheet, elucidated herebelow as an example.

A stream of waste water, containing a high percentage of calcium hydroxide and having a pH value of 11, is supplied through a conduit pipe 1 to a hydrolysis- and acidification device 2, wherein solid components will precipitate, e.g. a part of the calcium as calcium carbonate, while hydrolysis and acidification of the dissolved organic components occurs. Said device may be an open pond or a closed reactor as is indicated by means of a dash-line. Due to the acidification a part of the precipitated calcium carbonate is redissolved. Subsequently the waste water flows through conduit pipe 3 to a methane reactor 4. In case the hydrolysis, the acidification and the methane forming are performed in one step, the waste water will flow without using a hydrolysis- and/or acidification device 2 into the reactor, as indicated by means of the dash-dot-line 23. Said waste water has e.g. a concentration of fermentable

organic components, that correspond to a COD of 7 000 mg/l ([$Z^-$] ~ 70 mmol/l) and consequently a percentage of dissolved calcium ions of 1 400 mg/l (according to (3));

According to the invention, before being supplied to the methane reactor, said water is diluted with water that has been subjected to an anaerobic fermentation and — consequently has a low COD ([$Z^-$] ~ 0) — and is extremely free of calcium ($c_{CA}$ ~ 0) that through conduit pipe 11, 12 is supplied and at 13 is mixed into line 3, e.g. in a volume ratio 1 : 1. This means that the water flowing into the reactor 4 has a COD of 3 500 and a calcium content of 700 mg/l, which is sufficiently low to enable a fermentation at a pH of about 7 without precipitation of $CaCO_3$ so that the quality of the sludge in 4 is not affected disadvantageously.

Starting from a constant pH of 7.0 and a temperature of 30 °C and a $P_{CO_2}$ in the methane reactor of 0.2 (20 % $CO_2$ in the biogas) according to the neutrality equation (4) it may be calculated, that the concentration of dissolved calcium will amount to 700 mg/l.

Consequently from said reactor 4 water is provided having a low COD ([$Z^-$] ~ 0) and an unchanged calcium percentage of 700 mg/l.

The substantially calcium-free purified water, that is admixed through 11, 12 at 13, is achieved according to the invention as follows :

From the water that has been subjected to an anaerobic fermentation and streaming from the reactor 4 to outlet 5 a part (e. g. 50 %) is tapped off at 6 and is supplied to a stripping device through conduit pipe 7. In said device 8 the partial pressure of $CO_2$ is reduced so far, that the calcium hydrocarbonate will decompose and will form carbon dioxide and water and calcium carbonate will precipitate. The reduction of the partial pressure may be achieved by supplying a gas different from carbon dioxide, e.g. air, at 9 into device 8 and to distribute it very well. Device 8 may be an open pond. It is also possible to apply a roof 10 (indicated by a dash-line) and creating a subatmospheric pressure above the liquid (gas exhaustion indicated schematically by arrow 14). Also biogas, from which the $CO_2$ has been removed substantially completely, may be used as a stripping gas ; said possibility is indicated by means of dash-lines as conduit pipe 16 from the methane gas outlet of the reactor 4, in which conduit pipe at 15 the $CO_2$ gas is removed from the gas.

The device 8 preferably comprises a partition 20 that does not reach to the bottom and divides said device into two spaces 21 and 22, wherein the gas supplied at 9 in space 21 causes a rather important agitation, whereas the liquid will flow from there under partition 20 to space 22, wherein the outlet conduit pipe 11 has a very quiet flow regime and consequently the calcium carbonate may precipitate very well.

Still two or more stripping devices 8 may be present, so that the liquid flow to and from one and the other devices is fed. Each time from one of the devices 8 the conduit pipes 7 and 11 of which have been closed and from which the liquid has been removed, the precipitated calcium carbonate may be removed, e. g. by means of a schematically indicated mechanical shovel 17. The method may be continued continuously via a different device 8.

Through conduit pipe 11, 12 an anaerobic fermented waste water (COD ≈ 0, Ca ≈ 0) is supplied to the mix point 13.

Said water may be supplied also to a stream upward place in the process indicated by means of a dash-line 18, for example it is fed to point 19 at the inlet of the hydrolysis- and acidification reactor 2, even into the reactor or between the reactor and the methane reactor.

For the sake of completeness it is mentioned that Dutch patent application 76.11903 (Klaus Haberer), claiming a DT-priority from 1975-11-19, discloses a method for decarbonizing and/or biologically oxidizing and nitrifying water, having a high degree of hardness ; according to said method water is subjected to a multi-step intensive aeration in order to strip $CO_2$ and subsequently precipitation of $CaCO_3$, oxidation of organic substances and ammonium-ions are promoted in separated reaction spaces. Blending of water rich in calcium and of water poor in calcium, to adapt it for an efficient anaerobic fermentation is not disclosed in said application.

## Claims

1. A method for adapting waste water, being rich in calcium, for anaerobic fermentation, characterized in that in at least a part of the waste water that has been subjected to an anaerobic fermentation, the equilibrium

$$Ca(OH)_2 + 2\,CO_2 \leftrightarrows Ca(HCO_3)_2 \leftrightarrows CaCO_3\downarrow + CO_2\uparrow + H_2O$$

that has been adjusted in the waste water by the reaction of the carbon dioxide gas — formed during said anaerobic fermentation — with $Ca(OH)_2$ is shifted to the rightband side, by reducing the partial pressure of carbon dioxide, then diluting waste water being rich in calcium with at least a part of the waste water that is poor in calcium and subsequently the mixture obtained is subjected to an anaerobic fermentation.

2. A method according to claim 1 characterized in reducing the partial pressure of carbon dioxide by reducing, optionally intermittently, the gas pressure above the surface of the waste water and/or by stripping said waste water with a gas different from carbon dioxide, and agitating continuously.

3. A method according to claim 2, characterized in that the partial pressure of carbon dioxide is reduced by means of aeration.

4. A method according to claim 1 or 2 characterized in that said method is applied to a continuous stream of waste water being rich in calcium.

5. A method according to one of the preceding claims characterized in that waste water being rich in calcium and having still to be subjected to an anaerobic fermentation is diluted in a volume ratio of 1 : 1 with a waste water that has been subjected to an anaerobic fermentation.

6. An apparatus for performing the process according to one of the preceding claims, characterized in that it comprises a space for the anaerobic fermentation, a recycling tube to reintroduce a part of the water treated therein, a stripping device having a gas inlet- and/or pressure reducing means in said recycling tube, a space to enable the precipitated calcium carbonate to settle and a mixing connection of said recycling tube to a supply line for waste water to be purified to the fermentation space in order to add said liquid from said stripping device to said waste water to be purified.

7. An apparatus according to claim 6 characterized in that said stripping device has means to block the liquid stream therefrom, means to remove substantially all liquid therefrom and means, such as mechanical shovels to remove the precipitated calcium carbonate therefrom.

8. An apparatus according to claim 6 or 7 characterized in that said stripping device comprises a space with means to feed the liquid to be treated as well as the gas thereto in such a manner that said gas may rise through said liquid and a space wherein calcium carbonate may precipitate, which space is nearer to the liquid outlet and is separated from the first mentioned space by means of a partition.

**Patentansprüche**

1. Verfahren für die Vorbereitung von calciumreichem Abwasser für anaerobe Gärung, dadurch gekennzeichnet, dass man in mindestens einem Teil des Abwassers, das einer anaeroben Gärung unterworfen worden ist, das Gleichgewicht

$$Ca(OH)_2 + 2\,CO_2 \leftrightarrows Ca(HCO_3)_2 \leftrightarrows CaCO_3\downarrow + CO_2\uparrow + H_2O$$

das in dem Abwasser durch Umsetzung des während der anaeroben Gärung gebildeten Kohlendioxidgases mit $Ca(OH)_2$ eingestellt worden ist, nach der rechten Seite verschiebt, indem man den Partialdruck von Kohlendioxid herabsetzt, dann calciumreiches Abwasser mit mindestens einem Teil des calciumarmen Abwassers verdünnt und anschliessend das erhaltene Gemisch einer anaeroben Gärung unterwirft.

2. Verfahren nach Anspruch 1, dadurch gekennzeichnet, dass man den Partialdruck von Kohlendioxid herabsetzt, indem man, gegebenenfalls intermittierend, den Gasdruck über der Oberfläche des Abwassers herabsetzt und/oder indem man das Abwasser mit einem von Kohlendioxid verschiedenen Gas strippt und kontinuierlich rührt.

3. Verfahren nach Anspruch 2, dadurch gekennzeichnet, dass man den Partialdruck von Kohlendioxid durch Belüftung herabsetzt.

4. Verfahren nach Anspruch 1 oder 2, dadurch gekennzeichnet, dass man das Verfahren auf einen kontinuierlichen Strom von calciumreichem Abwasser anwendet.

5. Verfahren nach einem der vorangehenden Ansprüche, dadurch gekennzeichnet, dass man calciumreiches Abwasser, das noch einer anaeroben Gärung unterworfen werden soll, in einem Volumenverhältnis von 1 : 1 mit einem Abwasser verdünnt, das einer anaeroben Gärung unterworfen worden ist.

6. Vorrichtung zur Ausführung des Verfahrens nach einem der vorangehenden Ansprüche, dadurch gekennzeichnet, dass sie aufweist: einen Raum für die anaerobe Gärung, ein Rückführungsrohr, um einen Teil des behandelten Wassers wieder in den Raum für die anaerobe Gärung zurückzuführen, eine Strippungseinrichtung mit einem Gaseinlass- und/oder Druckverminderungsmittel in dem Rückführungsrohr, einen Raum, der es dem ausgefällten Calciumcarbonat ermöglicht, sich abzusetzen, und einen Mischungsanschluss der Rückführungsrohres an eine Speiseleitung für zu reinigendes Abwassers in den Gärungsraum, um die Flüssigkeit aus der Strippungseinrichtung dem zu reinigenden Abwasser zuzusetzen.

7. Vorrichtung nach Anspruch 6, dadurch gekennzeichnet, dass die Strippungseinrichtung Mittel zum Blokkieren des Flüssigkeitsstromes daraus, Mittel zur Entfernung von im wesentlichen aller Flüssigkeit daraus und Mittel, wie mechanische Schaufeln, zur Entfernung des ausgefällten Calciumcarbonats daraus hat.

8. Vorrichtung nach Anspruch 6 oder 7, dadurch gekennzeichnet, dass die Strippungseinrichtung einen Raum mit Mitteln zur Zuführung der zu behandelnden Flüssigkeit sowie des Gases in den Raum in einer solchen Weise, dass das Gas durch die Flüssigkeit aufsteigen kann, und einen Raum, worin Calciumcarbonat ausfallen kann, aufweist, wobei der zuletzt genannte Raum näher zu dem Flüssigkeitsauslass angeordnet ist und von dem zuerst genannten Raum mit Hilfe einer Trennwand getrennt ist.

**Revendications**

1. Procédé pour adapter de l'eau usée qui est riche en calcium en vue de la fermentation anaérobie, caractérisé en ce que dans au moins une partie de l'eau usée qui a été soumise à une fermentation anaérobie, l'équilibre

$$Ca(OH)_2 + 2\ CO_2 \leftrightarrows Ca(HCO_3)_2 \leftrightarrows CaCO_3\downarrow + CO_2\uparrow + H_2O$$

qui a été ajusté dans l'eau usée par la réaction du dioxyde de carbone, formé pendant cette fermentation anaérobie, avec du $Ca(OH)_2$, est déplacé vers la droite par abaissement de la pression partielle du dioxyde de carbone, puis l'eau usée riche en calcium est diluée avec au moins une partie de l'eau usée pauvre en calcium, après quoi le mélange obtenu est soumis à une fermentation anaérobie.

2. Procédé suivant la revendication 1, caractérisé en ce que la pression partielle du dioxyde de carbone est abaissée par réduction, éventuellement par intermittence, de la pression gazeuse au-dessus de la surface de l'eau usée et/ou par épuration de l'eau usée au moyen d'un gaz autre que le dioxyde de carbone, et par agitation ininterrompue.

3. Procédé suivant la revendication 2, caractérisé en ce que la pression partielle du dioxyde de carbone est abaissée par aération.

4. Procédé suivant la revendication 1 ou 2, caractérisé en ce que le procédé est appliqué à un courant ininterrompu d'eau usée qui est riche en calcium.

5. Procédé suivant l'une quelconque des revendications précédentes, caractérisé en ce que l'eau usée qui est riche en calcium et qui doit encore être soumise à une fermentation anaérobie est diluée dans un rapport en volume de 1 : 1 avec une eau usée qui a été soumise à une fermentation anaérobie.

6. Appareil pour exécuter le procédé suivant l'une quelconque des revendications précédentes, caractérisé en ce qu'il comprend un espace pour la fermentation anaérobie, une conduite de recyclage pour y ramener une partie de l'eau traitée, un dispositif d'épuration comportant un moyen pour introduire un gaz et/ou abaisser la pression dans la conduite de recyclage, un espace pour permettre au carbonate de calcium précipité de sédimenter et une connexion de mélange de la conduite de recyclage à une conduite d'admission pour l'eau usée à purifier dans l'espace de fermentation afin d'ajouter le liquide provenant du dispositif d'épuration à l'eau usée à purifier.

7. Appareil suivant la revendication 6, caractérisé en ce que le dispositif d'épuration comprend un moyen pour bloquer le courant de liquide qui en sort, un moyen pour en évacuer sensiblement tout le liquide et un moyen tel que des pelles mécaniques pour en éliminer le carbonate de calcium précipité.

8. Appareil suivant la revendication 6 ou 7, caractérisé en ce que le dispositif d'épuration comprend un espace avec un moyen pour admettre le liquide à traiter de même que le gaz dedans de façon que le gaz puisse s'élever dans le liquide et un espace dans lequel le carbonate de calcium peut précipiter, lequel espace est plus proche de la sortie de liquide et est séparé du premier espace cité par une cloison.

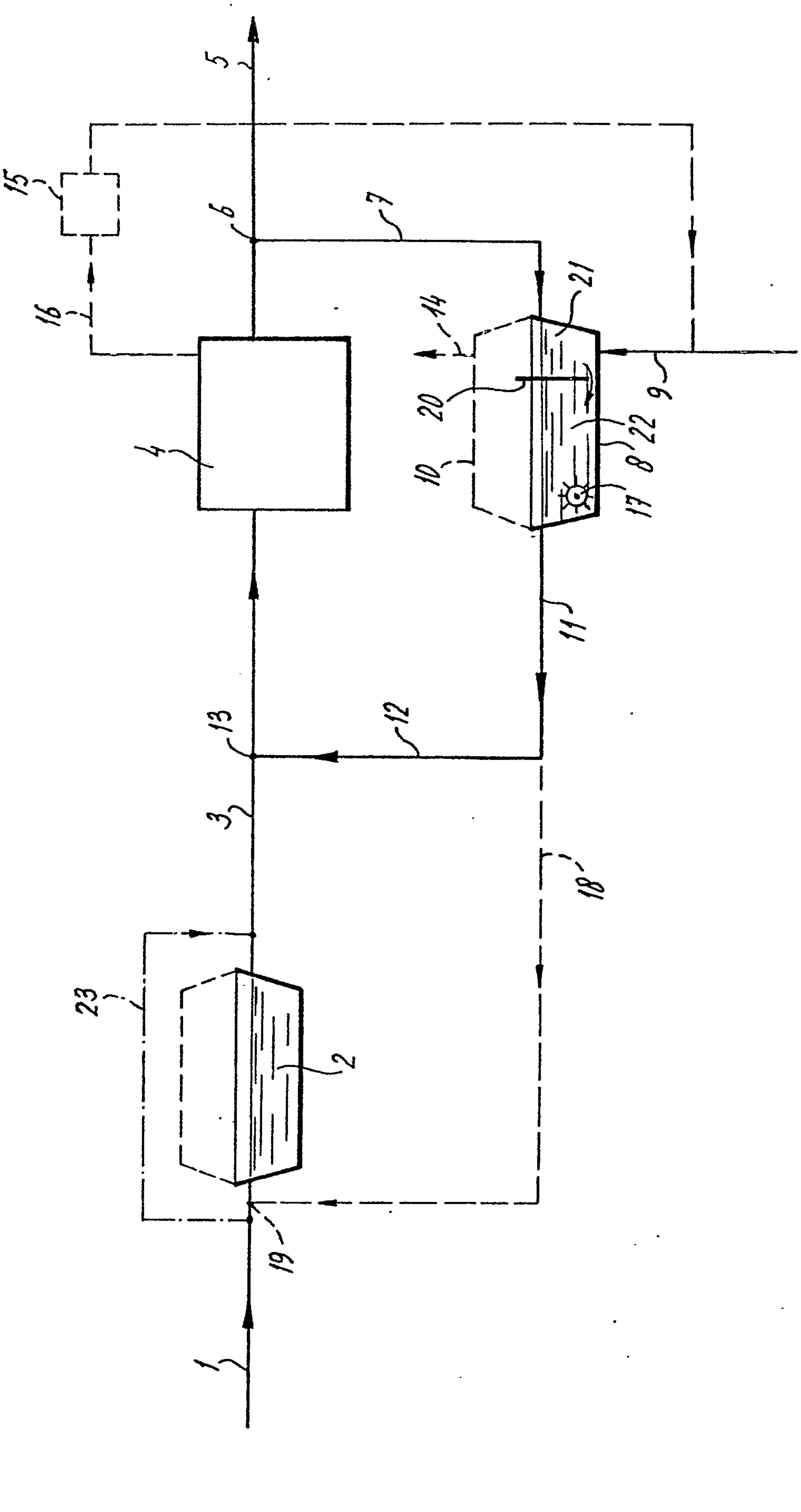
1
2
3
4
5
6
7
8
9
10
11
12
13
14
15
16
17
18
19
20
21
22
23